(19) Europäisches Patentamt

European Patent Office

Office européen des brevets

(11) EP 1 355 204 A2

(12) EUROPEAN PATENT APPLICATION

(43) Date of publication:
22.10.2003 Bulletin 2003/43

(51) Int Cl.$^7$: G03G 15/20, B29C 67/24

(21) Application number: 02252775.8

(22) Date of filing: 19.04.2002

(84) Designated Contracting States:
AT BE CH CY DE DK ES FI FR GB GR IE IT LI LU MC NL PT SE TR
Designated Extension States:
AL LT LV MK RO SI

(71) Applicant: W.L. GORE & ASSOCIATES, INC.
Newark, Delaware 19714-9206 (US)

(72) Inventors:
• Oyama, Shinro, c/o Japan Gore-tex Inc.
  Mitsu-gun, Okayama-ken 709-2123 (JP)
• Kikukawa,Hiroyasu c/o Japan Gore-Tex, Inc.
  Mitsu-gun, Okayama-ken 709-2123 (JP)

(74) Representative: Shanks, Andrew et al
Cruikshank & Fairweather,
19 Royal Exchange Square
Glasgow G1 3AE (GB)

(54) **Polytetrafluoroethylene film & manufacture of same**

(57) Polytetrafluoroethylene thin film comprising a thin film of polytetrafluoroethylene having thickness of ≤20 µm; surface roughness (Ra) of ≤0.1 µm; tensile strength of ≥80 N/mm$^2$; and light beam transmittance of ≥80% for light of 500 nm wavelength. A process for manufacture of polytetrafluoroethylene film comprising compressing porous polytetrafluoroethylene film at a temperature above the melting point of the film, followed by cooling to a temperature below the melting point of the film while continuing to apply pressure.

EP 1 355 204 A2

**Description**

## FIELD OF THE INVENTION

The present invention relates to thin film and thick film of polytetrafluoroethylene (PTFE); to processes for manufacture thereof; to a fixing roll and fixing belt employing the thin film; and to fixing apparatus employing the fixing roll or fixing belt.

The usual method for production of polytetrafluoroethylene (PTFE) film is the skiving process, which involves preforming PTFE molding powder into a hollow cylinder profile; sintering; and then shaving films from the resultant preform.

However, the conventional process has a number of drawbacks, such as the following.

(1) There is a tendency for microvoids to form.
(2) It is difficult to produce thicknesses below 50 $\mu$m.
(3) The material has a milky opacity, giving it low light beam transmittance in the visible region (light beam transmittance of light of the 500 nm wavelength is $\leq$20%).
(4) It is difficult to produce a smooth [film] having surface roughness (Ra) of$\leq$0.1 $\mu$m.
(5) Tensile strength is low (20 -50 N/mm$^2$).

Unexamined Patent Application 56-24431 discloses a process for modifying PTFE by subjecting skived PTFE film to a softening process at 327 -450°C, and stretching the film by a ratio of 1.1 -6.0 at a temperature of 150 -400°C during or after the [softening] process.

While this process affords PTFE films with thicknesses of $\leq$50 $\mu$m and high strength (maximum tensile strength of about 160 N/mm$^2$), it has the following drawbacks.

(1) It is not possible to completely eliminate microvoids.
(2) It is difficult to produce thicknesses below 20 $\mu$m, and there is significant irregularity in thickness.
(3) Light beam transmittance in the visible region is low (light beam transmittance of light of the 500 nm wavelength is $\leq$60%)
(4) It is difficult to reduce surface roughness (Ra) to below 0.1 $\mu$m.

Unexamined Patent Application 9-278927 discloses a PTFE film casting process that involves applying a PTFE dispersion onto the surface of a thin film of an organic solvent-soluble fluororesin--formed on a substrate--, and then drying it; fusing or sintering at a temperature above the PTFE melting point; and then immersing it, together with the substrate, in an organic solvent that dissolved the organic solvent-soluble fluororesin, to separate the PTFE film.

With this method, it is possible to produce smooth-surfaced PTFE films with thicknesses of <10 $\mu$m, but nevertheless there are the following drawbacks:

(1) The resultant films have low tensile strength (about 20 -40 N/mm$^2$).
(2) The resultant films have a fair degree of milky opacity, such that light beam transmittance in the visible region is low (light beam transmittance of light of the 500 nm wavelength is about 50-70%).
(3) It is difficult to produce thicknesses of more than 10 $\mu$m with a single application of PTFE dispersion, and thus several applications are needed to produce films of greater thickness.

Unexamined Patent Application 53-55380 discloses a PTFE manufacturing process that involves subjecting PTFE film to stretching along at least two axes, with the stretch ratio along each axis being from 2 to 4, to obtain an expanded film. The expanded film is then calendered with calender rolls held at a temperature below the PTFE melting point (327°C) until specific gravity reaches $\geq$2.1.

While this process gives PTFE films that are thin and have high tensile strength, the fact that calendering is carried out at temperatures below the PTFE melting point, and that the PTFE film shrinks by several percent after passing through the calender rolls, results in the following drawbacks.

(1) It is difficult to reduce surface roughness (Ra) to below 0.1 $\mu$m.
(2) The resultant film has a milky opacity such that light beam transmittance in the visible region is low (light beam transmittance of light of the 500 nm wavelength is about 60 - 70%).
(3) Thickness is irregular.

In electrophotography fixing roll applications (such as in electrophotographic devices such as printers and copiers), a PFA tube is typically used as the release surface layer for the elastic roll, as described in Denshi Shashin Gakkai Shi, Vol. 33, No. 1 (1994). For reasons relating to the fabrication process, it is difficult to produce PFA tubes that are less than 25 μm in thickness, and moreover the poor wear resistance means that adequate service life is not achieved with thinner materials. For this reason, fixing rolls that use PFA tubes less than 25 μm in thickness as the surface layer are not currently practical. On the other hand, if the surface release layer is too thick, the effects of the underlying elastic layer are lost, so that the surface release layer loses its ability to conform to contours on the paper surface during the process of fixing the toner onto the paper, resulting in uneven application of pressure to the toner and consequent deterioration in image quality. To avoid losing the effects of the elastic layer due to a thick surface release layer, it is necessary to increase the thickness of the elastic layer, but this creates the problem of requiring a significant amount of heat to bring the temperature of the surface release layer up to the temperature at which fixing becomes possible. For fixing belts as well, the use of a PFA tube surface layer results in a deterioration in image quality, for the same reasons as with fixing rolls. Fixing belts typically use a coated surface layer of fluororesin (such as PTFE or PFA), but adequate service life cannot be assured due to the low wear resistance.

Unexamined Patent Application 60-186883 teaches the use of a porous film of polytetrafluoroethylene rendered void-free at least in its surface layer, as the surface layer for a fixing roll. However, as this method renders the porous polytetrafluoroethylene film void-free by compressing it between rolls, the surface of the resultant surface layer is not very smooth, and does not readily go below surface roughness (Ra) of 1.0 μm. As a result, toner release tends to be poor, and uneven application of pressure to the toner causes deterioration in image quality.

The invention has the following objects:

(1) To provide PTFE film that is free from voids; has a highly smooth surface; is either thick or thin; and is highly transparent; and a process for manufacture thereof.

(2) To provide a fixing roll and a fixing belt having a thin fluororesin surface layer with thickness of ≤20 μm; that offer extended service life and high image quality; and that allow fixing to be carried out with less heat; and to provide a fixing apparatus employing this fixing roll or fixing belt.

The present invention was perfected as a result of extensive research directed to achieving these aims.

Specifically, the invention provides an electrophotographic device comprising a fixing roll, a fixing belt, and a fixing apparatus made from a polytetrafluoroethylene film, as well as a process therefore, described hereinbelow,

(1) Polytetrafluoroethylene thin film comprising a thin film of polytetrafluoroethylene having thickness of ≤20 μm; surface roughness (Ra) of ≤0.1 μm; tensile strength of ≥80 N/mm$^2$; and light beam transmittance of >80% for light of 500 nm wavelength.

(2) Polytetrafluoroethylene thin film according to (1) wherein porosity is ≤10%.

(3) A fixing roll employing as the surface layer polytetrafluoroethylene thin film according to (1) or (2).

(4) A fixing belt employing as the surface layer polytetrafluoroethylene thin film according to (1) or (2).

(5) A fixing apparatus employing the fixing roll according to (3)

(6) A fixing apparatus employing the fixing belt according to (4).

(7) A process for manufacture of polytetrafluoroethylene film comprising a film of polytetrafluoroethylene and having light beam transmittance of >80% for light of 500 nm wavelength.

(8) A process for manufacture of polytetrafluoroethylene film [comprising the step of] compressing porous polytetrafluoroethylene film at a temperature below the melting point of said film, followed by compression at a temperature above the melting point of said film.

(9) A process for manufacture of polytetrafluoroethylene film [comprising the step of] compressing porous polytetrafluoroethylene film while subjecting it to a temperature above the melting point of said film, followed by cooling to a temperature below the melting point of said film while continuing to apply pressure.

The material for producing the PTFE film herein is porous PTFE film. This porous PTFE film may consist of expanded or unexpanded porous PTFE films of types known in the art; however, expanded PTFE (ePTFE) film is preferred owing to the high strength of the resultant PTFE film.

The ePTFE film herein is produced from a molded article of paste --prepared by mixing fine powder of PTFE with a molding aid-- by eliminating the molding aid from the molding, expanding it at high temperature at a high rate of speed, and then optionally sintering; where the material is uniaxially expanded, nodes (folded crystals) form narrow "islands" at a right angle to the stretching direction, these nodes being interconnected by fibrils (linear bundles of molecules produced by folded crystals breaking up and being drawn out) oriented in the stretching direction. The result is a fibrous texture in which spaces between fibrils or defined by fibrils and nodes serve as pores. Where the material is biaxially expanded, the result is a "spider web" texture in which fibrils extend radially between island-like nodes that interconnect the fibrils, and containing numerous spaces defined by the fibrils and nodes.

The ePTFE film material herein may be either uniaxially expanded ePTFE or biaxially expanded ePTFE, with biaxially expanded ePTFE being preferred. Since biaxially expanded ePTFE has been stretched along two axes, anisotropy is lower than for uniaxially expanded ePTFE, and the resultant PTFE film has high strength in both the TD and MD.

ePTFE film used as the film material herein will preferably have porosity of from 10 to 95%, and preferably from 40 to 90%; and thickness of from 5 to 500 μm, and preferably from 5 to 200 μm. The TD stretch ratio is 100 - 1000% and preferably 150 - 800%; the MD stretch ratio is 100 - 1000%, and preferably 150 - 800%. The ratio of tensile strength in the machine direction and transverse direction of the film (product film) herein can be manipulated via the TD and MD stretch ratios of the film material. Where, for example, the product film is produced from ePTFE film material having a TD stretch ratio of 400% and an MD stretch ratio of 200%, tensile strength along the axis corresponding to the TD of the film material will be approximately twice tensile strength along the axis corresponding to the MD of the film material.

The PTFE film herein is manufactured by first subjecting the ePTFE film to a first compression process in which it is compressed (pressed) at a temperature below the melting point, to produce a calendered film. Compression temperature is not particularly critical provided it is below the PTFE melting point; temperature is low, typically $\geq 1°C$, and preferably $\geq 100°C$. Where compression temperature is above the melting point there will be significant shrinkage of the product film. Compression parameters are selected such that resultant film porosity is $\leq 50\%$, preferably $\leq 20\%$, and ideally $\leq 10\%$. Compressing force, expressed as planar pressure, is typically 0.5 -60 N/mm$^2$, and preferably 1 - 50 N/mm$^2$. Compressing apparatus selection is not critical provided the apparatus is capable of compressing the film; preferred apparatuses are those in which the film is compressed as it passes between rolls or belts, such as a calender roll apparatus or belt press apparatus. Where a calender roll apparatus or belt press apparatus is employed, air present within the ePTFE film or between ePTFE film layers is readily pressed out from the ePTFE film as the film is passed through the rollers or belts, thus giving a product film that is free from voids and wrinkles.

Product film thickness will depend in part upon the desired thickness and the porosity of the film material, but is usually from 3 to 500 μm, and preferably from 5 to 200 μm.

The calendered film from the first compression process is then subjected to a second compression process in which it is compressed (pressed) at a temperature above the PTFE melting point. Compression temperature is not particularly critical provided it is above the PTFE melting point; temperature is high, typically from 1 to 100°C, and preferably from 20 to 80°C, above melting. Heating the ePTFE film to a temperature above melting allows a smoother surface to be imparted to the product film. In preferred practice, compression temperature will be dropped to a temperature below melting at the point in time at which pressure is released. Where pressure is released [with the material] above the melting point, the product film will experience appreciable shrinkage and be susceptible to wrinkling. Compression parameters are selected such that resultant film porosity is $\leq 10\%$, and preferably $\leq 1\%$. Compressing force, expressed as planar pressure, is typically 0.1 -100 N/mm$^2$, and preferably about 1 -30 N/mm$^2$. Compressing apparatus selection is not critical provided the apparatus is capable of nipping and compressing the film; preferred apparatuses are a belt press or hot press unit capable of applying desired temperature and pressure for a predetermined duration.

The product film herein may be manufactured in a single pass where the apparatus is capable of heating the film material to a temperature above the PTFE melting point, and then cooling it to a temperature below the PTFE melting point while maintaining pressure. With such a process, there is substantially no shrinkage of the product film, since despite the fact that the ePTFE film is brought to a temperature above the PTFE melting point at the outset of the compression process, it is cooled to a temperature below melting prior to releasing the pressure applied to the ePTFE film.

Where, for example, a belt press unit is employed, the ePTFE film is brought to a temperature above the PTFE melting point while compressed between the belts, and then cooled to a temperature below melting, the resultant product film will have negligible shrinkage. This method also enables continuous production of product film.

The thin film of PTFE herein has thickness of <20 μm and smooth surfaces. Thickness is 0.1 -20 μm, preferably 1 -20 μm; and surface roughness (Ra) is $\leq 0.1$ μm, and preferably $\leq 0.05$ μm. The thin film herein has exceptional tensile strength; tensile strength is ordinarily $\geq 80$ N/mm$^2$, and preferably 100 N/mm$^2$.

The thin film of PTFE herein has exceptional light beam transmittance; transmittance of light of 500 nm wavelength is $\geq 80\%$, and preferably $\geq 90\%$.

In the first compression process herein, compression may be carried out in two or more stages in order to minimize voids in the resultant film. In the second compression process, where a hot press is employed to heat and compress the film, smooth, heat-resistant film may be interposed between the hot press plates and the film when compressing it with hot press plates. Or, where a belt press unit is employed, thermal compression may be carried out with a smooth, heat-resistant film interposed between the metal belts and the film. Films serviceable for this purpose include polyimide film, e.g. UPILEX 20S (ex Ube Kosan). With this method, the product film may be imparted with surface roughness (Ra) about equal to the surface roughness (Ra) of the heat-resistant film, and is effective in cases where a high degree of surface smoothness cannot be imparted to the hot press plate or metal belts.

The process herein readily gives transparent thin films of 20 μm or thinner, an accomplishment difficult where conventional processes are used. As an example, ePTFE film 50 μm thick with 80% porosity can be subjected to compression with calender rolls (at roll temperature of 70°C) to reduce porosity to 2% and thickness to 14 μm; and then to pressing in a press unit at press plate temperature of 320 - 400°C, pressure of 10.0 N/mm$^2$, a feed rate of 0.5 -2.0 m/min, and press time of 1 to 4 min. to produce a film of 0% porosity and 12 μm thickness. Subjecting film 9 μm thick with 85% porosity to a similar process gives a film of 0% porosity and 2 μm thickness.

Surface roughness (Ra) of film herein is determined either by the surface roughness (Ra) of the press plates --where hot pressing with hot press plates is conducted is the second compression process-- or by the surface roughness (Ra) of the heat-resistant film --where the calendered film from the first compression process is sandwiched between heat-resistant films and compressed by hot press plates. Where, for example, hot pressing is performed with highly polished press plates having surface roughness (Ra) of ≤01 μm, the resultant film will have surface roughness (Ra) of ≤0.1 μm. Similarly, where the calendered film from the first compression process is sandwiched between polyimide film (UPILEX 20S, Ra = 0.01 μm), the resultant film will have surface roughness (Ra) of about 0.1 μm.

The invention is not limited to thin film, and may be used to give thicker transparent film as well. In this process, film material is compressed in a first compression process and then compressed in a second compression process, in the manner described earlier. However, the film material here--while having the same general qualities as the film material described earlier--will be thicker, e.g., thicker than 400 μm, and usually 400 μm to 1 mm. The film material may consist of a single film, or of a laminate composed of 2 to 6, preferably 2 to 4, laminated layers.

Transparent product film of thickness exceeding 20 μm, and preferably 25 -100 μm in thickness, can be produced from such thick film materials. According to the invention, laminate film having total thickness of 450 μm-- composed of three layers of ePTFE film each having 70% porosity and 150 μm thickness--can be made into film having 0% porosity and 50 μm thickness, and having excellent transparency and surface gloss. The product film will have light beam transmittance of >80% and preferably ≥85 and porosity of ≤10% and preferably ≤2%. Surface roughness is typically ≤0.1 m and preferably ≤0.5 μm. The high transparency and tensile strength of such PTFE film makes it suitable as a heat-, weather-, chemical- and wear resistant release film for applications such as protective film for construction applications.

The use of ePTFE film of high tensile strength herein gives product film endowed with high tensile strength. For example, the use herein of ePTFE film having tensile strength of 10 -100 N/mm$^2$ will give product film having tensile strength of 50 -200 N/mm$^2$. Conventional skived PTFE film typically has tensile strength of 20 -50 N/mm$^2$, while cast PTFE film typically has tensile strength of about 20 -40 N/mm$^2$; compared to these conventional PTFE films, the product film herein has extremely high tensile strength.

Turning now to a more detailed description of the PTFE film (product film) herein, film porosity is from 0 to 5%, and scanning electron microscope (SEM) examination of the surface (at 50 -2000x magnification) shows no visible voids, pinholes or fibril structures. When the film is sliced with a microtome and the cut surface examined by SEM, no voids, pinholes or fibril structures are observed. Examination of the film appearance with the naked eye shows it have uniform transparency, free of milky opacity or striations produced by residual voids, pinholes, and fibril structures.

The PTFE film herein has extremely high transparency and cosmetic appearance. Conventional PTFE film does not have such high transparency.

As noted, the PTFE film herein is thin and endowed with outstanding transparency and tensile strength, making it suitable for a variety of applications. It is particularly useful as a surface film for fixing rolls or fixing belts of the sort commonly used to date in electrophotography systems. Used as a surface layer film for a fixing roll, the PTFE thin film herein gives a fixing roll having good heat-and chemical resistance, release properties, wear resistance and long service life. As it is a simple matter to produce a surface layer having thickness of ≤20 μm--difficult to accomplish to date-- there can be obtained a fixing roll giving high image quality, and capable of fixing with less heat. Where a fixing roll has a thin release surface layer, the effects of the underlying elastic layer are more readily expressed, and this not only gives higher imaging quality, but also allows the elastic layer to be made thinner, so that fixing can be accomplished with less heat. The PTFE thin film herein is superior to PFA in terms of heat resistance, wear resistance, release properties, and affinity to release oils, giving a fixing roll with extended service life, high imaging quality, and fixing with less heat.

For fixing belts as well, the use of the PTFE thin film herein as the release surface layer affords longer service life and higher imaging quality than does a PFA surface layer. While fixing belts typically have a fluororesin coating layer, the PTFE thin film herein has better wear resistance than a fluororesin coating layer, giving the fixing belt a longer service life and higher.

According to the invention, a fixing apparatus having a fixing roll or fixing belt can produce better imaging quality than a conventional fixing apparatus when the fixing roll or fixing belt herein is used as the fixing roll or fixing belt thereof.

Examples

A fuller understanding of the invention is provided through the following examples.

Example 1

ePTFE film (porosity 80%, thickness 100 µm) was compressed in a calender roll unit (roll temperature 70°C, linear pressure 8 N/mm², feed speed 6.0 m/min) to produce a milky film of 5% porosity and 14 µm thick. The milky film was sandwiched between two sheets of polyimide film (UPILEX 20S ex Ube Kosan) and subjected to hot pressing in a hot pressing unit at a press plate temperature of 400°C and planar pressure of 10 N/mm², which yielded dense PTFE film with 0% porosity, 12 µm thickness, high transparency, and a glossy surface.

Example 2

ePTFE film (porosity 80%, thickness 100 µm) was sandwiched between two sheets of polyimide film (UPILEX 20S ex Ube Kosan) and compressed in a double-belt press unit (roll temperature at point of initial compression 395°C, roll temperature at point of release of pressure 100°C, linear pressure 6 N/mm², feed speed 1 m/min), which yielded dense PTFE film with 0% porosity, 12 µm thickness, high transparency, and a glossy surface.

Example 3

Following the procedure in Example 1, ePTFE film (porosity 80%, thickness 50 µm) was used to produce dense PTFE film with 0% porosity, 6 µm thickness, high transparency, and a glossy surface.

Example 4

Following the procedure in Example 1, ePTFE film (porosity 80%, thickness 30 µm) was used to produce dense PTFE film with 0% porosity, 4 µm thickness, high transparency, and a glossy surface.

Example 5

Following the procedure in Example 1, ePTFE film (porosity 90%, thickness 7 µm) was used to produce dense PTFE film with 0% porosity, 0.5 µm thickness, high transparency, and a glossy surface.

Example 6

Three layers of ePTFE film (porosity 70%, thickness 150 µm) were stacked to give a film laminate with total thickness of 450 µm, which was compressed in a calender roll unit in the manner of Example 1. The compressed film laminate was sandwiched between two highly-polished press plates, compressed using a hot press (press plate temperature 400°C, planar pressure 15 N/mm²), and held for 15 minutes at this same temperature and pressure. Press plate temperature was then gradually brought back down to 25°C over a 45-minute period, while continuing to apply pressure. This procedure yielded dense PTFE film with 0% porosity, 50 µm thickness, high transparency, and a glossy surface.
SEM examination of the transparent, glossy dense PTFE films obtained in Examples 1-6 revealed no pinholes, voids or fibril structures.
Measurements of surface roughness (Ra) of the transparent, glossy dense PTFE films obtained in Examples 1-6 gave values of less than 0.05 µm in each case.

Comparison 1

Production of skived PTFE film

A fine molding powder of PTFE (mean particle size 35 µm) was preformed in a hollow cylindrical mold under molding pressure of 17.2 N/mm², to give a hollow cylindrical perform 250 mm in diameter and 300 mm high. The preform was removed from the mold, placed in an electric oven, and sintered for 15 hours at 370°C. The sintered article was cooled in the furnace to give a molding. The molding was lathed to produce skived PTFE film 50 µm thick.

Comparison 2

Production of PTFE film by PTFE dispersion application

A 20% solution of PTFE/vinylidene fluoride copolymer resin in acetone was applied to polyimide film, dried, and baked at 130°C to produce a 1 μm layer. A PTFE dispersion was applied over the fluororesin layer, dried, and sintered at 360°C to produce a layer 3 μm thick. The process of applying, drying and sintering the PTFE dispersion was repeated twice to produce a layer of total [thickness] of 5 μm. [The film], together with the polyimide film base, was immersed in acetone to completely dissolve the PTFE/vinylidene fluoride copolymer resin, yielding a PTFE film 5 μm thick.

Example 7

The dense PTFE film prepared in Example 3 was subjected to corona discharge treatment along an edge thereof, and then thermally fused into a tube. The tube inside wall was impregnated with a 25°C Na/naphthalene complex salt solution (trade name TETRA H ex Junkosha), and sequentially immersed in methanol, water, and again in methanol (10 seconds each time). Air was jetted onto the inside and outside surfaces to dry them. A primer (trade name DY39-051 ex Toray-Dow Corning) was applied to the inside of the tube, which was then arranged within a roll mold (35 mm inside diameter). An aluminum core (outside diameter 31 mm, barrel length 320 mm) was inserted through the center and held there while injecting silicone rubber between the tube and aluminum core. After thermal curing for 30 minutes at 150°C, secondary vulcanization was conducted at 200°C for 4 hours, yielding a fixing roll with a surface layer of dense PTFE film.

Comparison 3

A fixing roll having a PFA surface layer was produced analogously to Example 7, except for using a tube of PFA 25 μm thick (STM ex Gunze).

Example 8

A fixing roll with a surface layer of dense PTFE film was produced analogously to Example 7, except that the outside diameter of the aluminum core inserted to the roll mold was 33 mm.

Comparison 4

A fixing roll having a PFA surface layer was produced analogously to Example 7, except for using a tube of PFA 30 μm thick (STM ex Gunze).

Example 9

Polyamide varnish (U VARNISH S ex Ube Kosan) was applied onto a hollow cylindrical core of stainless steel (25 mm outside diameter), and the hollow cylindrical core was passed through a die (26 mm inside diameter) to produce a polyimide varnish coating film on the hollow cylindrical core. After baking for 30 minutes at 300°C, the hollow cylindrical core was withdrawn to give a polyimide tube 50 μm thick, with a 25 mm outside diameter and 250 mm length. The outside surface of the polyimide tube was subjected to a corona discharge process, and an adhesive for rubber (DY39-012 ex Toray-Dow Corning) was applied to a thickness of approximately 2 μm. A stainless steel core was then inserted into the bore of the polyimide. Separately, a dense PTFE film tube--treated on its inside wall with 25°C Na/naphthalene complex salt solution as in Example 7--was inserted into a stainless steel hollow cylinder of 26.5 mm inside diameter. The polyimide tube-sheathed stainless steel core was inserted into this stainless steel hollow cylindrical mold, and the entire assembly was placed in a vulcanization mold. Liquid rubber (LSRSE6744 ex Toray-Dow Corning) was then injected into the gap between the dense PTFE film layer and the stainless steel core, and vulcanized. After vulcanization the assembly, together with the hollow cylindrical mold, was removed from the vulcanization mold, and the hollow cylindrical mold was slipped off to give a fixing belt having a surface layer of dense PTFE.

Comparison 5

A fixing belt having a PFA surface layer was produced analogously to Example 8, except for using a tube of PFA 30 μm thick (STM ex Gunze).

Comparison 6

The surface of a polyimide tube prepared as in Example 9 was subjected to corona discharge treatment, after which an adhesive for rubber (DY39-012 ex Toray-Dow Corning) was applied thereto to a thickness of approximately 2 μm, and dried. A PFA resin dispersion (855-104 ex Dupont) was sprayed on and baked for 30 minutes at 380°C to produce a fixing belt with a fluororesin coating layer.

The dense PTFE films of the above Examples and Comparisons were evaluated as follows. Results are tabulated in Table 1.

(1) Porosity: using the equation below, calculated from apparent density (□)measured in accordance with apparent density measurement described in JIS K 6885.

$$\text{porosity (\%)} = (2.2 - \square)/2.2 \times 100 \qquad\qquad (a)$$

(2) Thickness: measured with a.1/1000 mm dial thickness gauge (ex Technolock) without any load apart from the body spring load.
(3) Surface roughness (Ra): measured in accordance with JIS B 0601.
(4) Tensile strength: measured in accordance with JIS K 7127. Test pieces were #2 test pieces, testing speed was 50 mm/min.
(5) Light beam transmittance: transmittance of visible light (500 mm wavelength) was measured with a spectrophotometer (UV-240 ex Shimadzu Seisakusho).
(6) SEM examination: surface and cross section were examined at 50 -2000× magnification with an SEM (S-3500N ex Hitachi).

Table 1

| | Porosity (%) | Thickness (μm) | Roughness Ra (μm) | Tensile strength (N/mm$^2$) | | 500 nm Transmittance (%) | SEM Examination |
|---|---|---|---|---|---|---|---|
| | | | | MD | TD | | |
| Ex. | 1 0 | 12 | 0.010 | 105 | 105 | 90 | no voids, fibrils, pinholes |
| Ex.2 | 0 | 12 | 0.009 | 110 | 110 | 90 | no voids, fibrils, pinholes |
| Ex.3 | 0 | 6 | 0.010 | 150 | 130 | 90 | no voids, fibrils, pinholes |
| Ex.4 | 0 | 4 | 0.009 | 120 | 130 | 90 | no voids, fibrils, pinholes |
| Ex. 5 | 0 | 0.5 | 0.009 | 200 | 160 | 90 | no voids, fibrils, pinholes |
| Ex. 6 | 0 | 50 | 0.009 | 100 | 100 | 88 | no voids, fibrils, pinholes |
| Cmp. 1 | 3 | 50 | 0.200 | 50 | 40 | 10 | striations on surface |
| Cmp. 2 | 3 | 5 | 0.150 | 30 | 24 | 60 | no voids, fibrils, pinholes |

From Table 1 it will be apparent that dense PTFE films according to the invention are free from voids, thin, have little surface roughness, and good strength and transparency.

The fixing rolls of the above Examples and Comparisons were evaluated as follows. Results are tabulated in Table 2.

(1) Wear resistance (service life): the fixing roll was installed in a printer, and after printing 50,000 pages the portion contacted by the separating claw was inspected for wear damage. Wear resistance was determined by removing the film surface layer from the fixing roll and measuring the depth (maximum) of the worn portion of the film surface with a surface roughness gauge (SV-600 ex Mitsutoyo).

(2) Image quality: solid images were output and inspected for image quality with the naked eye.

(3) Heat required for fixing: a halogen lamp heater was installed inside the fixing roll, and with fixing roll surface temperature at 25°C, halogen lamp heater was switched on. The time required for fixing roll surface temperature to reach 150°C--a temperature level at which fixing is possible--was measured.

Table 2

| | Worn portion depth (max)(μm) | Image quality | Warm-up time (sec) |
|---|---|---|---|
| Example 7 | 3.0 | no irregularity in solid image | 120 |
| Example 8 | 3.5 | no irregularity in solid image | 60 |
| Comparison 3 | 6.5 | some irregularity in solid image | 150 |
| Comparison 4 | 7.1 | no irregularity in solid image | 70 |

From Table 2 it will be apparent that the fixing roll herein has excellent wear resistance, uniform imaging, and short fixing roller warm-up time.

The fixing belts of the above Examples and Comparisons were evaluated as follows. Results are tabulated in Table 3.

(1) Wear resistance (service life): the fixing belt was installed in a printer, and after printing 50,000 pages, the portion contacted by the separating claw was inspected with the naked eye for wear damage.

(2) Image quality: solid images were output and inspected for image quality with the naked eye.

Table 3

| | Wear by separation claw after 50,000 pages | Image evaluation |
|---|---|---|
| Example 9 | negligible | no irregularity in solid image |
| Comparison 5 | significant | some irregularity in solid image |
| Comparison 6 | significant | irregularity in solid image |

From Table 3 it will be apparent that the fixing belt herein has excellent wear resistance and uniform imaging.

The dense PTFE films of the above Examples and a PFA tube (STM ex Gunze, 30 μm thick) were evaluated as follows. Results are tabulated in Table 4.

(1) Release: Teflon adhesive tape (#5490 ex 3M, 2.54 cm width) was cut to a length of 10 cm and applied to the sample film. Using a tensile tester (TG-200N ex Ninebea), Teflon adhesive tape/sample film peel strength was measured. Peel strength is average stress over a distance of 10 -40 mm from initial peeling location at a peeling speed of 50 mm/min.

Table 4

| | Peel strength (N/2.54 cm) |
|---|---|
| Example 1 | 1.9 |
| Example 2 | 1.8 |
| PFA tube (STM ex Gunze, 30 μm thick) | 2.8 |

From Table 4 it will be apparent that dense PTFE according to the invention has better release than conventional PFA tubing.

The dense PTFE films of the above Examples and a PFA tube (STM ex Gunze, 30 μm thick) were evaluated as follows. Results are tabulated in Table 5.

(1) Wetting by silicone oil: under conditions of 22°C, 30% humidity, the angle of contact of dimethylsilicone oil (KF-96-300 cs ex Shin-Etsu Chemical) vis-à-vis the sample film was measured with a contact angle measuring unit (CA-D ex Kyowa Kaimen Kagaku).

Table 5

|  | Dimethylsilicone oil (KF-96-300 cs) contact angle (°) |
|---|---|
| Example 2 | 34.5 |
| PFA tube (STM ex Gunze, 30 μm thick) | 41.0 |

From Table 5 it will be apparent that dense PTFE according to the invention has better dimethylsilicone oil wetting than conventional PFA tubing.

**Claims**

1. In an electrophotographic device, including a fixing belt and a fixing apparatus, the improvement wherein at least one of the fixing roll, the fixing belt, and the fixing apparatus comprises a thin film of polytetrafluoroethylene having thickness of ≤20 μm; surface roughness (Ra) of ≤0.1 μm; tensile strength of ≥80 N/mm$^2$; and light beam transmittance of ≥80% for light of 500 nm wavelength.

2. The electrophotographic device according to claim 1 wherein porosity of said thin film is ≤10%.

3. A process for manufacture of polytetrafluoroethylene film comprising the steps of compressing porous polytetrafluoroethylene film at a temperature below the melting point of said film, followed by compression at a temperature above the melting point of said film.

4. A process for manufacture of polytetrafluoroethylene film comprising the steps of compressing porous polytetrafluoroethylene film while subjecting it to a temperature above the melting point of said film, followed by cooling to a temperature below the melting point of said film while continuing to apply pressure.